# EUROPEAN PATENT APPLICATION

(11) **EP 4 169 926 A1**
(43) Date of publication of application: **26.04.2023**
(21) Application number: 20941862.3
(22) Date of filing: 08.09.2020
(51) Int. Cl.: C07F 1/10, C09K 11/06, G01N 21/64

(54) **RATIOMETRIC FLUORESCENT OXYGEN DETECTION MATERIAL WITH ULTRA-LOW DETECTION LIMIT AND HIGH SENSITIVITY**

(30) Priority: 22.06.2020 CN 202010572573
(71) Applicant: Zhengzhou University, High-Tech Zone Zhengzhou Henan 450001 (CN)
(72) Inventor: ZANG, Shuangquan, Zhengzhou, Henan 450001 (CN); DONG, Xiyan, Zhengzhou, Henan 450001 (CN)
(74) Representative: Niburska, Danuta
(86) International application number: PCT/CN2020/114013
(87) International publication number: WO 2021/258551

(57) **Abstract**

The present invention discloses a ratiometric oxygen detection material with an ultra-low detection limit and a high sensitivity and a preparation method therefor, which belongs to the crossover fields of nano materials and coordination chemistry. The material is a silver-sulfur cluster-based metal organic framework material bridged by a 12-core silver-sulfur cluster as a node and a bidentate organic ligand, and has a ratiometric oxygen detection performance. The compound has a chemical formula of (Ag₁₂(SBu^{t})₈(CF₃COO)₄(bpy-NH₂)₄)ₙ, which belongs to the tetragonal system; and the space group is I-42m. The compound has a strong yellow fluorescence under oxygen-free conditions, including two emission peaks at 456 nm and 556 nm, with a fluorescence lifetime of 0.37 ns and 3.12 ms, respectively; and the fluorescence at 556 nm is extremely sensitive to oxygen, and in an oxygen content range of 0-2.4 Pa, the fluorescence intensity quenching thereof and the oxygen pressure are in a good linear relationship, such that the oxygen can be quantitatively detected. The material has the advantages of a low detection limit, a fast response, a high sensitivity and a good stability, etc.

## Description

The disclosure relates to the crossing field of nanomaterials and coordination chemistry, and more particularly, to a ratiometric oxygen detection material with low detection limit and high sensitivity and a preparation method thereof.

Quantitative measurement of oxygen is essential in scientific and technological fields. Rapid and accurate in situ detection of oxygen concentration is of great significance. In a fluorescence quenching process, an optical oxygen detection material offers advantages in sensitivity, ease of operation, and in situ detection over conventional oxygen measurement techniques (such as gas chromatography, oxygen analyzer, and electrochemical sensor). A dual-emission oxygen detection material has a self-calibration function that minimizes errors caused by differences in test environments.

Metal-organic framework (MOF) materials are a class of porous and crystalline materials consisting of metal ions or clusters coordinated to organic ligands. A conventional dual-emission MOF typically includes dual-emission centers, one is a main framework, and the other is a fluorophore in a channel-like pore. The conventional dual-emission MOF is difficult to achieve an ultra-sensitive quantitative measurement of oxygen concentration. Compared with a single type of metal ion, the joint of a mercaptosilver cluster with a fluorescence characteristic is combined to the organic ligands capable of being quenched by oxygen to form a dual-emission porous material. As the channels of the metal-organic framework materials are supported and constructed by organic ligands, the organic ligands are completely exposed in the channels, thus enhancing the dynamic collision between oxygen molecules and ligands and improving the fluorescence quenching efficiency.

Owing to high selectivity of mercaptosilver cluster and organic ligands, and excellent photophysical and photochemical properties, the metal-organic framework materials show great prospects in the field of molecular sensing.

One objective of the disclosure is to provide a metal-organic framework (MOF) material comprising a silver cluster for ratiometric oxygen detection with low detection limit and high sensitivity.

The MOF material has a chemical formula (Ag₁₂(SBu^{t})₈(CF₃COO)₄(bpy-NH₂)₄)ₙ, a crystal structure is tetragonal crystal system; and a space group is /-42m;
where bpy-NH₂ is 3-amino-4,4'-bipyridine with a structural formula as below:

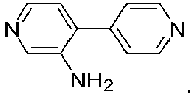

Another objective is to provide a preparation method of the ratiometric oxygen detection material, and the method comprising:
dispersing Bu^{t}SAg in a mixed solution of dichloromethane and ammonia, and rapidly stirring to form a mixture; adding silver trifluoroacetate to the mixture, and stirring to produce a clear solution; and adding bpy-NH₂ to the clear solution, and stirring to form a final solution; evaporating the final solution at room temperature to produce a colorless crystal; filtering, washing, and drying the colorless crystal at room temperature to yield a ratiometric oxygen detection material.

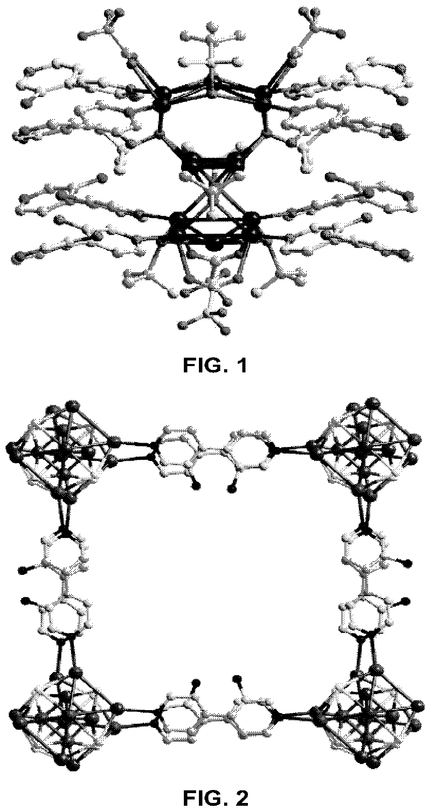

bpy-NH₂ of the ratiometric oxygen detection material is used as a bidentate ligand and coordinated to joints of 12-core mercaptosilver clusters to form a two-dimensional layered structure; the two-dimensional layered structure is stacked up with each other in an ABAB form, to form a stable three-dimensional supramolecular structure through hydrogen bonds; the 12-core mercaptosilver clusters and bpy-NH₂ are elongated to form a plurality of channel-like pores (as shown in FIG. 2); and the porosity of the material is 17.5%.

The ratiometric oxygen detection material is used for rapid quantitative detection of oxygen, and the operations are as follows:
Measurement of ultra-low oxygen concentration: the ratiometric oxygen detection material fluoresces yellow in an oxygen-free environment, and exhibits, under vacuum, two emission peaks at two optimal emission wavelength of 456 nm (an excitation wavelength is 370 nm) and 556 nm (an excitation wavelength is 370 nm), respectively; the emission lifetime is 0.37 ns at 456 nm or 3.12 ms at 556 nm, respectively; and the fluorescence quantum yield is 14.62%; fluorescence quenching generally occurs due to loss of energy of an excited state, due to collision with oxygen; the quenching efficiency is proportional to the lifetime of the excited state, so that the quenching effect of the oxygen on the emission peak at 456 nm is negligible compared with that at 556 nm. Therefore, the emission peak at 456 nm is used to calibrate the oxygen concentration; oxygen, which absorbs light in the wavelength of 556 nm, quenches fluorescent light emitted from the ratiometric oxygen detection material. The quenching intensity reaches 99.9% at an oxygen pressure of 44.3 Pascal. Stern-Volmer quenching constant is calculated from the dimensions of the oxygen pressure and the quenching intensity; so the Stern-Volmer quenching constant is 2.25 Pa⁻¹, and the ultra-low oxygen pressure is 11.4 mPa.

High-sensitivity detection of oxygen concentration: the ratiometric oxygen detection material is placed in an alternate environment between pressure and vacuum; the fluorescence is quenched within 0.3 s; and the fluorescence intensity of the ratiometric oxygen detection material is unchanged, illustrating that the ratiometric oxygen detection material yields stable fluorescence in the shifting environment for a long time.

The following advantages are associated with the ratiometric oxygen detection material of the disclosure: the fluorescent light at 556 nm that is emitted from the ratiometric oxygen detection material is sensitive to oxygen; the quenching intensity is linearly proportional to the oxygen pressure within a range of 0-2.4 Pascal, thus achieving a high-sensitivity detection of oxygen concentration at an ultra-low oxygen pressure; and the ratiometric oxygen detection material is recycled and retains a long fluorescence lifetime.
FIG. 1 shows a chemical unit of a ratiometric oxygen detection material according to one example of the disclosure;
FIG. 2 shows a chemical structure of a ratiometric oxygen detection material according to one example of the disclosure;
FIG. 3 is an XRD spectra for a ratiometric oxygen detection material according to one example of the disclosure;
FIG. 4 is a fluorescence spectrum (for an excitation wavelength of 370 nm) for a ratiometric oxygen detection material according to one example of the disclosure;
FIG. 5 is a graph that illustrates the relationship between oxygen pressure and fluorescence intensity of a ratiometric oxygen detection material and illustrates a Stern-Volmer curve for oxygen quenching (at an oxygen pressure within a range of 0 - 44.3 Pascal);
FIG. 6 is a graph that illustrates the relationship between oxygen pressure and fluorescence intensity of a ratiometric oxygen detection material and illustrates a Stern-Volmer curve for oxygen quenching (at an oxygen pressure within a range of 0 - 2.4 Pascal);
FIG. 7 is a graph of fluorescence intensity (at a monitoring wavelength of 550 nm and an excitation wavelength of 370 nm) of a ratiometric oxygen detection material in an environment that cross back and forth between pressure and vacuum; and
FIG. 8 is a local enlarged graph of FIG. 7.

To further illustrate the disclosure, embodiments detailing a ratiometric oxygen detection material are described below. It should be noted that the following embodiments are intended to describe and not to limit the disclosure.

### Example 1 Material synthesis

0.15 g (0.75 mmol) of Bu^{t}SAg was dispersed in a mixed solution of 40 mL of dichloromethane and 0.1 mL of ammonia, and rapidly stirred to form a mixture; 0.06 g (0.27 mmol) of CF₃COOAg was added to the mixture and stirred to produce a clear solution; and 0.1 g of bpy-NH₂ was added to the clear solution and stirred for 1 minute to form a final solution; and the final solution was evaporated at room temperature for 3 days to produce 0.079 g of a colorless crystal (yield: 30%) ; and the colorless crystal was filtered, washed with alcohol, and dried at room temperature to yield a ratiometric oxygen detection material.

### Example 2 Fluorescence detection

The ratiometric oxygen detection material in Example 1 was illuminated by UV light at 370 nm and produced a bright yellow fluorescence in an oxygen-free environment; the fluorescence at 556 nm was quenched by oxygen in the air, so that the ratiometric oxygen detection material shows blue fluorescence.

### Example 3 Fluorescence spectroscopy

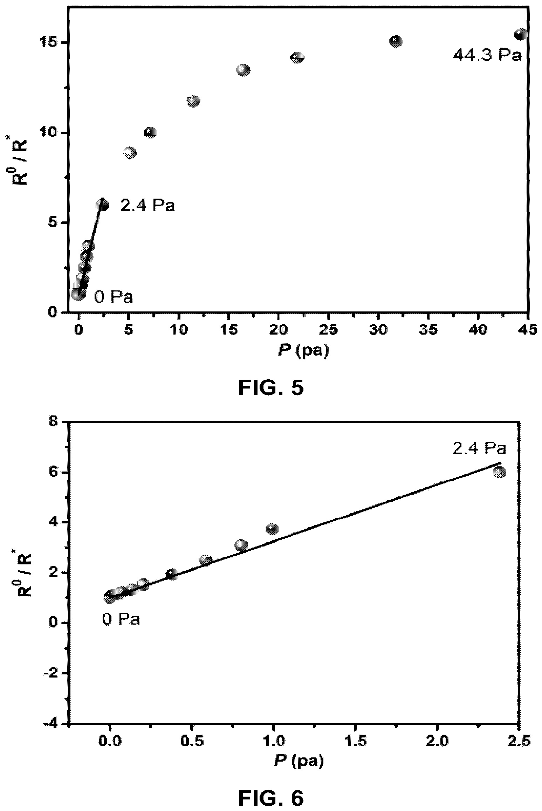

The ratiometric oxygen detection material in Example 1 was placed in a sample tube of a gas absorber; and two fiber-optical bundles were used to transmit an excitation light and receive an emission light, respectively; a partial pressure of oxygen was controlled by the gas absorber; and fluorescence spectroscopy was used to analyze the fluorescence at an excitation light at 370 nm that is emitted from the ratiometric oxygen detection material at different oxygen pressures. As shown in FIG. 6, the quenching intensity at 556 nm is linearly proportional to the oxygen pressure within a range of 0-2.4 Pascal, which illustrates that an ultra-low oxygen concentration is quantitatively measured by the ratiometric oxygen detection material.

### Example 4 Fluorescence intensity curve

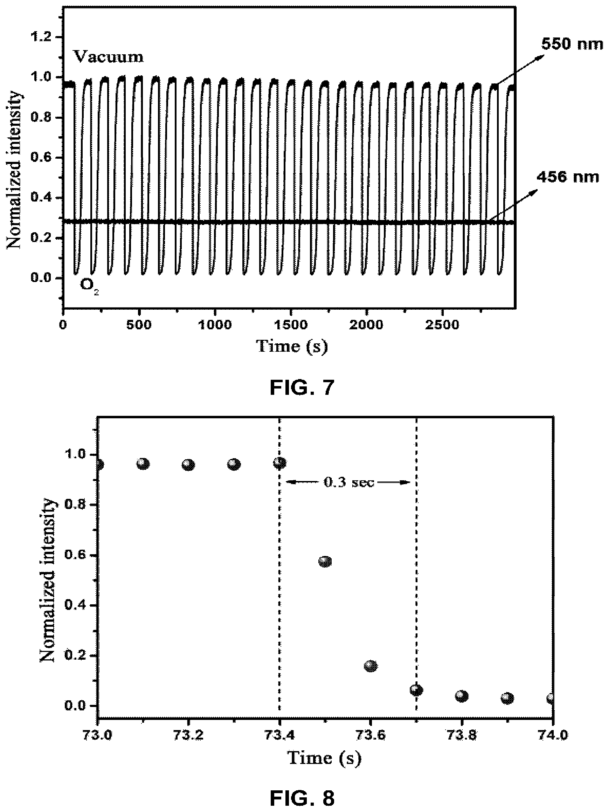

The ratiometric oxygen detection material in Example 1 was placed in an environment that cross back and forth between pressure and vacuum; the fluorescence intensity at 550 nm of the ratiometric oxygen detection material was measured and plotted to yield a fluorescence intensity curve. As shown in FIG. 7, the fluorescence intensity of the ratiometric oxygen detection material is unchanged, illustrating that the ratiometric oxygen detection material yields stable fluorescence in the environment for a long time. As shown in FIG. 8, the fluorescence is quenched by oxygen under vacuum within a fast response time of 0.3 s.

The ratiometric oxygen detection material in Example 1 was characterized as follows:

### Determination of crystal structure

The colorless crystal was mounted on a goniometer (Rigaku XtaLAB Pro) and illuminated with a beam of X-rays. Data was collected at room temperature by using Cu Kα radiation (λ=1.54184 Å) as a diffraction source and processed with a CrysAlis^{Pro} software. A crystal structure was solved using a direct method (SHELXS) and refined in full-matrix least squares by using a SHELXL-2015 module in OLEX2. All atoms except for some solvent molecules and hydrogen atoms, were refined anisotropically and placed in calculated position. All non-hydrogen atoms were refined with anisotropic thermal displacement parameters. The coordinates of the hydrogen atomic were available through theoretical hydrogenation. And crystal data are provided in Table 1.

**Table 1 Crystallographic data derived from the ratiometric oxygen detection material**

| **Ag₁₂bpy-NH₂** | |
|---|---|
| Formula | C₈₀H₁₀₈Ag₁₂F₁₂N₁₂O₈S₈ |
| Formula weight | 3144.70 |
| Temperature/K | 150 |
| Crystal system | tetragonal |
| Space group | /-42m |
| *a* /Å | 17.31644(12) |
| *b* /Å | 17.31644(12) |
| *c* /Å | 19.4319(4) |
| *α* /° | 90 |
| *β* /° | 90 |
| *γ* /° | 90 |
| *V* /Å³ | 5826.82(13) |
| *Z* | 2 |
| *ρ*_{calc} g/cm³ | 1.792 |
| *µ* /mm¹ | 17.708 |
| *F*(000) | 3072.0 |
| GOF | 1.099 |
| Final *R* indexes (*I* >2σ (*I*)) | *R*₁ = 0.0331, |
| | *wR*₂ = 0.0810 |
| Final *R* indexes (all data) | *R*₁ = 0.0342, |
| | *wR*₂ = 0.0814 |

| | |
|---|---|
| *^{a}R*₁ = ΣII*F*ₒI-I*F*_{c}IΣ/II*F*ₒI. *^{b}wR*₂ = (Σ*w*(*F*ₒ² -*F*_{c}²)²/Σ*w*(*F*ₒ²)²)^{1/2} | |

The ratiometric oxygen detection material was characterized by X-ray diffraction.

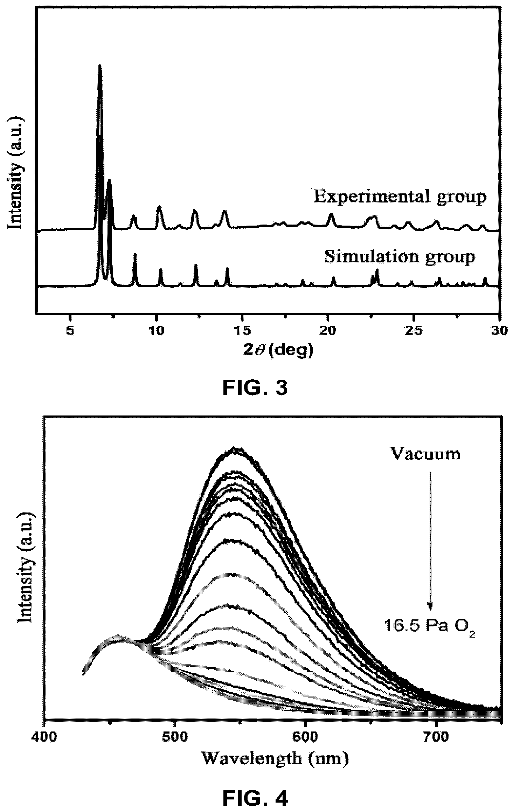

FIG. 3 is an XRD spectra for the ratiometric oxygen detection material. The XRD data obtained by simulation of a single crystal structure of the ratiometric oxygen detection material and the XRD data measured by experiment were plotted, respectively. (Instrument model: Rigaku D/max-3B diffractometer (Cu-Kα, λ = 1.5418 Å)).

## Claims

1. A ratiometric oxygen detection material, having a chemical formula (Ag₁₂(SBu^{t})₈(CF₃COO)₄(bpy-NH₂)₄)ₙ, which is a tetragonal crystal system, and a space group thereof being *I*-42m; wherein *a* = 17.31644(12) Å, *b* = 17.31644(12) Å, *c* = 19.4319(4) Å, *α* = 90°, *β* = 90°, *γ* = 90°, *V* = 5826.82(13) Å³, Z=2; bpy-NH₂ is 3-amino-4,4'-bipyridine with a structural formula as below:

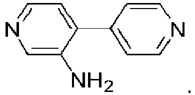

2. The ratiometric oxygen detection material of claim 1, wherein bpy-NH₂ of the ratiometric oxygen detection material is used as a bidentate ligand and coordinated to joints of 12-core mercaptosilver clusters to form a two-dimensional layered structure; the two-dimensional layered structure is stacked up with each other in an ABAB form, to form a stable three-dimensional supramolecular structure through hydrogen bonds.

3. A method of preparing the ratiometric oxygen detection material of claim 1, the method comprising dispersing Bu^{t}SAg in a mixed solution of dichloromethane and ammonia, and rapidly stirring to form a mixture; adding silver trifluoroacetate to the mixture, and stirring to produce a clear solution; and adding bpy-NH₂ to the clear solution, and stirring to form a final solution; evaporating the final solution at room temperature to produce a colorless crystal; filtering, washing, and drying the colorless crystal at room temperature to yield a ratiometric oxygen detection material.

4. Use of the ratiometric oxygen detection material of claim 1 or 2 for quantitative detection of oxygen using a fluorescence quenching method.

5. The use of claim 4, wherein an ultra-low oxygen pressure for quantitative detection is 11.4 mPa.
